Europäisches Patentamt

**European Patent Office**

**Office européen des brevets**

(11) Veröffentlichungsnummer: **0 249 083**
A2

## (12) EUROPÄISCHE PATENTANMELDUNG

(21) Anmeldenummer: **87107623.8**

(22) Anmeldetag: **26.05.87**

(51) Int. Cl.³: **H 02 M 1/084**
H 02 M 5/257, H 02 M 7/162

(30) Priorität: **12.06.86 DE 3619801**

(43) Veröffentlichungstag der Anmeldung:
**16.12.87 Patentblatt 87/51**

(84) Benannte Vertragsstaaten:
**CH DE FR GB LI SE**

(71) Anmelder: **Leybold-Heraeus GmbH**
**Bonner Strasse 498 Postfach 51 07 60**
**D-5000 Köln 51(DE)**

(72) Erfinder: **Thomas, Friedrich-Werner, Dr.**
**Schwarzwaldweg 2**
**D-6460 Gelnhausen 2(DE)**

(74) Vertreter: **Schickedanz, Willi, Dipl.-Ing.**
**Langener Strasse 70**
**D-6050 Offenbach/Main(DE)**

(54) **Einrichtung zur Stromversorgung.**

(57) Die Erfindung betrifft eine Einrichtung zur Stromversorgung, bei der die drei Phasen (12, 13, 14) eines Drehstromnetzes über jeweils antiparallel geschaltete Gleichrichterelemente (20 - 25) mit der Primärwicklung (32, 33, 34) eines Drehstrom-Transformators (35) verbunden sind. Die Sekundärwicklungen (36, 37, 38) dieses Transformators (35) speisen über Gleichrichter (40 - 45) einen Verbraucher, beispielsweise eine Elektronenstrahlkanone oder einen anderen Verbraucher, der während des Betriebs Kurzschlüsse erzeugt. Dabei sind auf der primären Wechselstromseite (11) Meßfühler (15 - 17, 18) vorgesehen, welche bei Vorliegen eines Überstroms auf der primären Wechselstromseite (11) steuerbare Gleichrichterelemente (20 - 25) sperren. Das Sperren erfolgt sehr schnell, weil als Gleichrichterelemente GTO-Thyristoren verwendet werden. Der Abbau der magnetischen Energie im Transformator (35) wird dadurch erreicht, daß die Primärseite dieses Transformators im Dreieck geschaltet ist.

EP 0 249 083 A2

FIG.1

# EINRICHTUNG ZUR STROMVERSORGUNG

Die Erfindung betrifft eine Einrichtung zur Stromversorgung, bei der drei Phasen eines Drehstromnetzes über jeweils antiparallel geschaltete Gleichrichterelemente mit der Primärwicklung eines Drehstrom-Transformators verbunden sind, dessen Sekundärwicklungen über Gleichrichter einen Verbraucher speisen, und bei der auf der primärseitigen Wechselstromseite Meßfühler vorgesehen sind, welche bei Vorliegen eines Überstroms auf der primärseitigen Wechselstromseite steuerbare Gleichrichterelemente sperren.

Bei elektrischen Verbrauchern, die über Stromversorgungen mit elektrischer Energie versorgt werden, treten bisweilen Kurzschlüsse auf, die dann, wenn keine besonderen Maßnahmen getroffen werden, zu Zerstörungen führen können. Besonders schwerwiegend sind diese Zerstörungen, wenn sie bei teuren Elektronenstrahlkanonen, Sputterkathoden oder Hochspannungs-Staubfilteranlagen auftreten.

Durch kurzzeitiges Ausschalten der Stromversorgung lassen sich diese Kurzschlüsse beseitigen, wobei die Unterbrechungszeit gerade so groß gewählt wird, daß die Entionisierung der Kurzschlußstrecke im Verbraucher erfolgt ist. Die Dauer der Unterbrechungszeit wird entweder auf Grund von Erfahrungswerten festgelegt oder meßtechnisch durch Erfassen der Beendigung des Stromflusses zum Verbraucher bestimmt.

Von besonderer Bedeutung ist hierbei, daß beim Auftreten von Kurzschlüssen während des Betriebs keine Zerstörungen in der Stromversorgung hervorgerufen werden oder Sicherheitsorgane, wie Sicherungen oder Schutzschalter, ansprechen, welche die Unterbrechungszeit wesentlich verlängern oder den Betrieb völlig unterbrechen.

Es ist bereits ein Drehstromsteller bekannt, der für die Energieversorgung von Elektronenstrahlkanonenöfen verwendet werden kann und aus antiparallel geschalteten Thyristoren besteht (Zeitschrift etz-b, Band 26, 1974, Heft 17, S. 429 - 433). Hierbei arbeitet der Steller als Spannungsregler und Schalter, der bei Überschlägen an einer Höchstspannungs-Prüfeinrichtung diese Prüfeinrichtung abschaltet.

Nachteilig ist bei diesem bekannten Drehstromsteller, daß er mit herkömmlichen Thyristoren arbeitet, die erst beim Nulldurchgang des Stroms verlöschen, so daß unter Umständen auch nach Erkennen eines Kurzschlusses diese Thyristoren noch bis zu einer Halbwelle stromleitend bleiben.

Bei einer weiteren bekannten Hochspannungs-Stromversorgung für Elektronenstrahlkanonenöfen kommt ein Thyristor-Brückensteller mit primärseitiger Drossel für die Glättung des Stromes und zur Begrenzung des Kurzschlußstromes zur Anwendung (Zeitschrift "Elektrizitätsverwertung", 1972, Nr. 6, S. 205 - 208). Nachteilig ist hierbei wiederum, daß herkömmliche Thyristoren verwendet werden und ein dem Steller nachgeschalteter Transformator in Stern/Stern-Schaltung vorgesehen ist.

Weiterhin ist eine Spannungsversorgung für ein Elektrofilter bekannt, bei welcher ein Thyristorsteller mit GTO-Thyristoren eingesetzt wird (DE-OS 33 08 411). Diese bekannte Spannungsversorgung weist auch einen Hochspannungstransformator auf, dessen Primärwicklung ein mit Thyristoren aufgebauter Schnellschalter parallelgeschaltet ist. Durch die Verwendung von ausschaltbaren GTO-Thyristoren in Verbindung mit dem den Kurzschlußstrom übernehmenden Schnellschalter ist eine Verringerung der in das Filter nach einem Kurzschluß gelieferten Energie möglich. Nachteilig ist hierbei jedoch, daß ein dreiphasiger Aufbau der Schnellschalter aufwendig ist.

Schließlich ist auch noch eine Einrichtung zur Spannungsversorgung eines Elektronenabscheiders bekannt, bei der die drei Phasen eines Drehstromnetzes über jeweils antiparallel geschaltete Gleichrichterelemente mit der Primärwicklung eines Drehstrom-Transformators verbunden sind, dessen Sekundärwicklungen über Gleichrichter einen Verbraucher speisen (DE-AS 13 03 454). Außerdem sind bei dieser Einrichtung auf der primärseitigen Wechselstromseite Meßfühler vorgesehen, welche bei Vorliegen eines Überstroms auf der primärseitigen Wechselstromseite steuerbare Gleichrichterelemente sperren. Der Nachteil dieser Einrichtung besteht darin, daß die antiparallel geschalteten Gleichrichterelemente nur in einer Stromrichtung Thyristoren sind. Außerdem sind diese Thyristoren herkömmliche Thyristoren, beispielsweise symmetrisch sperrende SCR-Thyristoren, asymmetrisch sperrende ASCR-Thyristoren oder rückwärtsleitende RIT-Thyristoren, wodurch sich eine sehr große Kurzschlußenergie ergibt.

Der Erfindung liegt die Aufgabe zugrunde, bei einer dreiphasigen Einrichtung zur Stromversorgung einerseits die Abschaltzeiten wesentlich zu verkürzen und andererseits auf Schnellschalter parallel zu Transformatorwicklungen zu verzichten.

Diese Aufgabe wird dadurch gelöst, daß bei einer gattungsgemäßen Stromversorgung alle antiparallel geschalteten Gleichrichterelemente GTO-Thyristoren sind und die Primärwicklungen des Drehstrom-Transformators im Dreieck geschaltet sind.

Durch die Kombination dieser Maßnahmen wird erreicht, daß bei sehr schneller Abschaltung mittels GTO-Thyristoren der Energieinhalt des Transformators über dessen primärseitige Dreieckschaltung abgebaut wird. Hierdurch ergibt sich der Vorteil, daß verbraucherseitig keine großen, schweren und teuren Drosseln mehr erforderlich sind. Außerdem entfällt eine Überdimensionierung der leistungselektronischen Bauteile. Ferner wird der beim Abschalten der Stromversorgung auftretende Stromstoß auf das Netz weitgehend reduziert. Weiterhin wird die Gefahr von Zerstörungen im Verbraucher entscheidend verringert.

Ein Ausführungsbeispiel der Erfindung ist in der Zeichnung dargestellt und wird im folgenden näher beschrieben. Es zeigen:

Fig. 1    eine Prinzipdarstellung einer Stromversorgung für den Leistungsbereich von einigen KW bis zu mehreren hundert KW;

Fig. 2    eine Schaltungsanordnung für den Überstromschutz;

Fig. 3    eine graphische Darstellung des Abschaltvorgangs mit herkömmlichen Thyristoren;

Fig. 4    eine Schaltungsanordnung für den Überstromschutz mit GTO-Thyristoren;

Fig. 5    eine graphische Darstellung des Abschaltvorgangs mit GTO-Thyristoren.

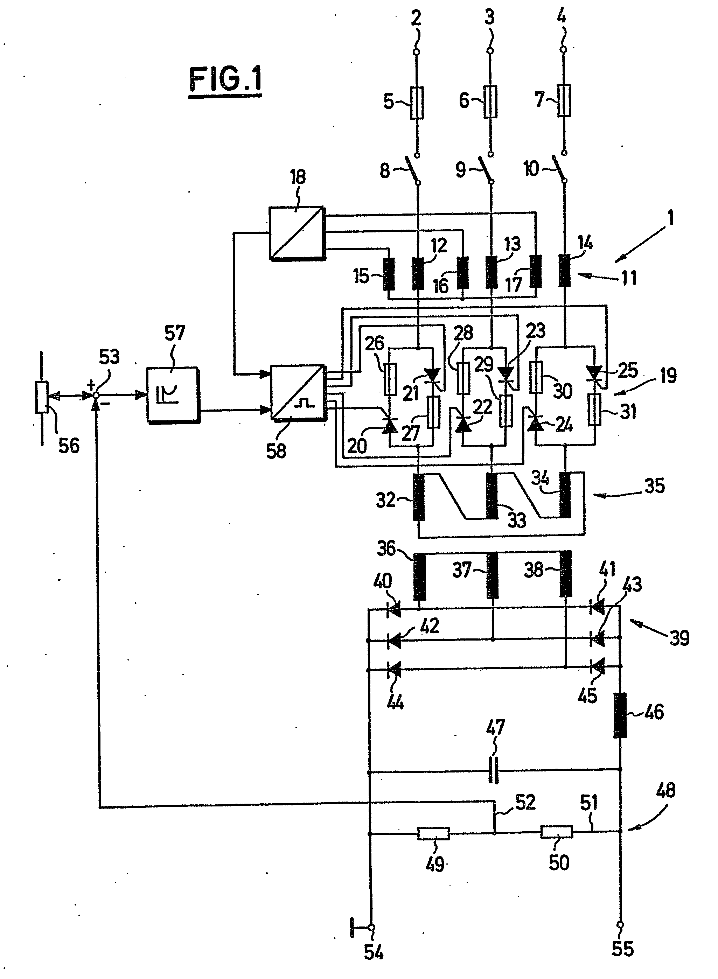

Die Fig. 1 zeigt eine dreiphasige Spannungs- bzw. Stromversorgung 1, die mit ihren eingangsseitigen Anschlüssen 2, 3, 4 an einem nicht dargestellten Dreiphasen-Wechselstromnetz liegt. Mit den Bezugszahlen 5, 6, 7 sind träge Sicherungen bezeichnet, die nur dann ansprechen, wenn ein elektronischer Überstromschutz, der weiter unten noch beschrieben wird, ausnahmsweise nicht anspricht. Im Anschluß an die Sicherungen 5, 6, 7 sind Schalter 8, 9, 10 zum betriebsmäßigen Abschalten vorgesehen, welche die drei Phasen der Netzwechselspannung einem Stromwandler 11 zuführen, der aus drei primärseitigen Wicklungen 12, 13, 14 und drei sekundärseitigen Wicklungen 15, 16, 17 besteht. Die sekundärseitigen Wicklungen 15, 16, 17 sind gewissermaßen Stromfühler, die einer Überstromschutzschaltung 18 melden, welche Ströme in den einzelnen Phasen fließen.

Die primärseitigen Wicklungen 12, 13, 14 sind mit einem Stromsteller 19 verbunden, der aus drei Schaltungsanordnungen mit jeweils antiparallel geschalteten Thyristoren 20, 21 bzw. 22, 23 bzw. 24, 25 besteht. Vor den Kathoden dieser Thyristoren 20 - 25 befinden sich flinke Halbleitersicherungen 26, 27 bzw. 28, 29 bzw. 30, 31, bei denen es sich ebenfalls um Sicherheitsorgane handelt, die nur beim Versagen des eigentlichen elektronischen Überstrom- bzw. Kurzschlußstromschutzes 18 ansprechen dürfen.

Die pro Phase vorgesehenen Stromsteller-Einheiten 20, 26, 21, 27 bzw. 22, 28, 23, 29 bzw. 24, 30, 25, 31 sind jeweils mit einer Primärwicklung 32, 33, 34 eines Dreiphasen-Transformators 35 verbunden, dessen Hochspannungs-Sekundärwicklungen 36, 37, 38 an einem Dreiphasen-Gleichrichter 39 angeschlossen sind. Während die Primärwicklungen 32, 33, 34 dieses Transformators 35 im Dreieck geschaltet sind, sind seine Sekundärwicklungen 36, 37 38 im Stern geschaltet. Für die Erfindung ist die Dreieck-Schaltung der Primärseite des Transformators 35 von besonderer Bedeutung, weil hierdurch magnetische Energie aufgebaut werden kann. Die Sekundärwicklung 36 liegt an der Verbindung zwischen der Anode einer Diode 40 und der Kathode einer Diode 41, während die Sekundärwicklung 37 an der Verbindung zwischen der Anode einer Diode 42 und der Kathode einer Diode 43 liegt. Die Sekundärwicklung 38 ist an der Verbindung zwischen der Anode einer Diode 44 und der Kathode einer Diode 45 angeschlossen. Parallel zu den Wicklungen 32 - 35 können noch zusätzliche Thyristoren vorgesehen sein, die Kurzschlußkreise schaffen können, über welche die magnetische Energie des Transformators 35 noch schneller abgebaut wird. Diese zusätzlichen Thyristoren sind jedoch im Hinblick auf die primärseitige Dreieck-Schaltung nicht erforderlich.

An die miteinander verbundenen Anoden der Dioden 41, 43, 45 ist eine Drossel 46 mit ihrem einen Anschluß angeschlossen. Der andere Anschluß dieser Drossel 46 führt auf einen Kondensator 47, der mit den Kathoden der Dioden 40, 42, 44 verbunden ist. Parallel zu dem Kondensator 47 ist ein Spannungsteiler 48 vorgesehen, der aus zwei Widerständen 49, 50 besteht, an deren gemeinsame Verbindungsleitung 51 ein Abgriff 52 angeschlossen ist, der zu einem Verknüpfungspunkt 53 führt. Der Anschluß der Drossel 46, der mit dem Kondensator 47 und dem Widerstand 50 verbunden ist, stellt den einen Pol 54 der Gleichstrom-Versorgungsspannung dar, während die miteinander verbundenen Kathoden der Dioden 40, 42, 44 den anderen Pol 55 oder Gleichstrom-Versorgungsspannung darstellen.

Dem Verknüpfungspunkt 53 wird ein Spannungs-Sollwert zugeführt, der an einem Potentiometer 56 abgegriffen wird. Von diesem Spannungs-Sollwert wird der am Abgriff 52 anstehende Spannungs-Istwert abgezogen, und die Differenz wird auf einen Spannungsregler 57 gegeben. Dieser Spannungsregler 57, der vorzugsweise ein PID-Regler ist, ist mit einer Gittersteuerung 58 für die Thyristoren 20 - 25 verbunden, an die auch die elektronische Überstromschutzschaltung 18 angeschlossen ist. Die elektronische Überstromschutzschaltung 18 wirkt über die Gittersteuerung 58 auf die Gitter der Thyristoren 20 - 25 ein, die zu einem Drehstromsteller geschaltet sind.

Mit Hilfe des Transformators 35 wird die Verbraucherspannung an die Netzspannung angepaßt. Diese angepaßte Spannung, die z. B. mehrere Kilovolt beträgt, wird durch den Gleichrichter 39 gleichgerichtet. Über den Spannungsteiler 48 wird die Verbraucherspannung erfaßt, und mit dem vom Potentiometer 56 abgegriffenen Sollwert verglichen. Die Differenz zwischen beiden Spannungen wird dem Spannungsregler 57 zugeführt, der über die Gittersteuerung 58 die Thyristoren 20 - 25 entsprechend ansteuert. Die Drossel 46 bildet zusammen mit dem Kondensator 47 eine Glättungsschaltung für die Verbraucherschaltung. Die Hauptaufgabe dieser Drossel 46 besteht jedoch dann, wenn herkömmliche Thyristoren verwendet werden, in der Begrenzung der Stromanstiegsgeschwindigkeit bei Kurzschluß. Wird über dem Stromwandler 11 ein Überstrom erfaßt, der vom Verbraucher verursacht wird, so wird dieser Meßwert dem Kurzschlußstromschutz 18 zugeführt.

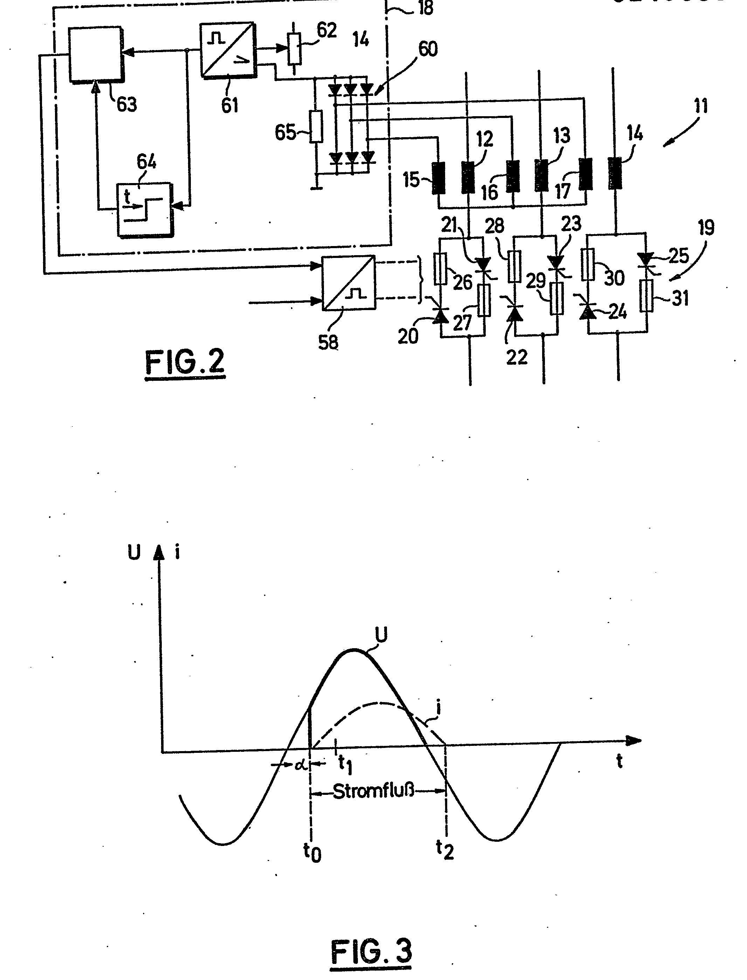

Wie die Fig. 2 zeigt, wird der Meßwert in dem Kurzschlußstromschutz 18 durch einen Gleichrichter 60 gleichgerichtet und einer Triggerschaltung 61 zugeführt, deren Ansprechschwelle durch einen Potentiometer 62 einstellbar ist. Wird diese Ansprechschwelle überschritten, so werden ein Speicher 63 gesetzt und ein Zeitglied 64 aktiviert. Nach einer im Zeitglied 64 einstellbaren Zeit wird der Speicher 63 wieder in seinen ursprünglichen Zustand zurückgesetzt. Während der Zeit, in welcher der Speicher gesetzt ist, wird ein Signal auf die Gittersteuerung 58 gegeben, das eine Impulsschaltung der Thyristoren 20 - 25 bewirkt.

Wie die Fig. 3 zeigt, werden trotz eines Abschaltbefehls die herkömmlichen Thyristoren 20 - 25 nicht sofort gelöscht, sondern erst nach einer Zeitverzögerung, die dadurch verursacht wird, daß die herkömmlichen Thyristoren erst nach einem Spannungsnulldurchgang abschalten können. Erfolgt beispielsweise zum Zeitpunkt $t_1$ ein Abschaltbefehl, so fließt noch bis zum Zeitpunkt $t_2$ ein Strom, denn die Stromdurchflußdauer ist durch den Einsatzzeitpunkt $t_o$ und den Zeitpunkt $t_2$ bestimmt.

Diese Zeit kann also im ungünstigsten Fall eine Halbwelle betragen, was bei einem 50 Hz-Wechselstrom 10 msec bedeutet. Ohne die den Stromanstieg begrenzende Drossel 46 würde der Strom während dieser 10 msec einen Wert annehmen, der die flinken Sicherungen 26-31 ansprechen ließe oder gar die Thyristoren 20-25 beschädigen würde.

Die für die Strombegrenzung erforderliche Induktivität der Drossel 46 bestimmt sich aus der Gleichung

$$U_v = L \cdot \frac{\triangle i}{\triangle t}$$

wobei $U_v$ die Spannung an den Anschlüssen 54,55, i der Strom durch die Drossel 46 und t die Zeit bedeuten.

Legt man den zulässigen Kurzschlußstrom beispielsweise auf das Fünffache des Nennstroms fest, so gilt

$$I_K = 5 \, I_n$$

Wenn also der Strom innerhalb von 10 msec nur auf Fünffache des Nennstroms ansteigen darf, bestimmt sich die erforderliche Induktivität aus der Gleichung

$$U_v = L \cdot \frac{I_k - I_n}{10 \text{ msec}} = L \cdot \frac{4 \, I_n}{10 \text{ msec}}$$

$$U_v = L \cdot \frac{I_k - I_n}{10 \text{ msec}} = L \cdot \frac{4 \, I_n}{10 \text{ msec}}$$

Bei einer Stromversorgung von beispielsweise 60 KW, die eine Verbraucherspannung von 30 KV und einen Nennstrom von 2 A hat, errechnet sich somit die Induktivität zu

$$L = 30 \text{ KV} \frac{10 \text{ msec}}{4 \cdot 2 \text{ A}} = 37,5 \text{ Henry}$$

Eine Drossel 46 mit dieser Induktivität hat ein Gewicht in der Größenordnung einer halben Tonne.

Hinzu kommt, daß zumindest die Thyristoren 20-25 und die flinken Sicherungen 26-31 den Kurzschlußstrom für die Zeit $\triangle t$ = 10 msec führen müssen, was bedeutet, daß diese Bauelemente überdimensioniert werden müssen.

Außerdem entlädt sich nach der Abschaltung nicht nur der Kondensator 47, was zu dem Abbau der Energie $1/2\ CU^2$ führt, sondern auch die Drossel 46 gibt die in ihr gespeicherte Energie $1/2\ LI^2$ ab. Diese Energien $1/2\ LI^2$ können zu Zerstörungen im Verbraucher führen, da allein schon die magnetische Energie der Drossel 46 bei dem vorstehenden Beispiel 1875 Wsec beträgt.

Mit dem erfindungsgemäßen Einsatz von GTO-Thyristoren werden die vorstehend genannten Nachteile vermieden. Wendet man obiges Beispiel auf GTO's an und nimmt man an, daß die Stromabschaltung bei 1,5 x $I_n$ in 15 µsec erfolgt, so ergibt sich eine Induktivität von L = 0,45 Henry mit einem Energieinhalt von nur 2 Wsec.

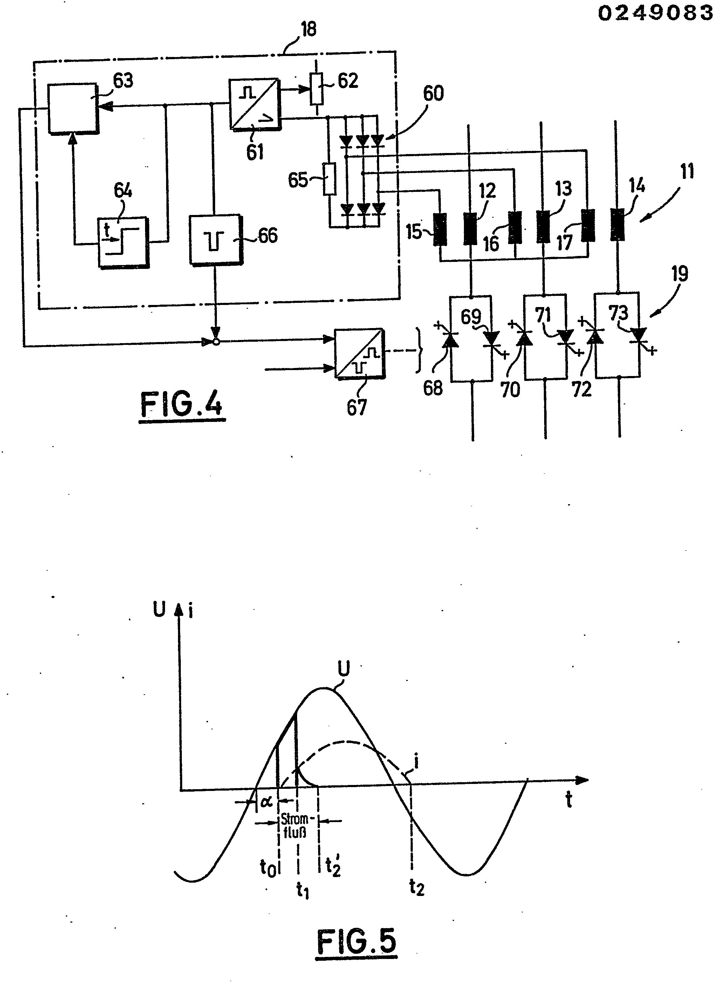

Wie die Fig. 4 zeigt, können die GTO-Thyristoren durch eine Abwandlung der Schaltungsanordnung gemäß Fig. 2 so gesteuert werden, daß der Überstrom wesentlich kleiner als bei der herkömmlichen Schaltung bleibt.

In der Schaltungsanordnung gemäß Fig. 4 weist die Überstromschutzschaltung 18 im Vergleich zur Anordnung der Fig. 2 zusätzlich noch eine Baugruppe 66 auf, die den Löschstrom für die GTO-Thyristoren 68-37 liefert.

Wenn die Ansprechschwelle der Triggerschaltung 61 überschritten wird, so setzt diese den Speicher 63, der die Einrichtung 67 aktiviert. Diese gibt hierauf einen Abschaltbefehl auf die Steuerelektroden der GTO-Thyristoren 68-73, d. h. sie leitet den Abschaltstrom aus der Baugruppe 66 auf die Steuerelektroden dieser GTO-Thyristoren 68-73. Hierauf schalten die GTO-Thyristoren 68-73, anders als die herkömmlichen Thyristoren, nahezu unverzögert ab. Nach einer vorgegebenen Zeit, die durch das Zeitglied 64 bestimmt wird, werden die GTO-Thyristoren 68-73 durch entsprechende Steuerimpulse wieder eingeschaltet.

In der Fig. 5 ist anhand einer graphischen Darstellung gezeigt, wie sich der Stromverlauf bei Verwendung von GTO-Thyristoren verhält. Die Darstellung bezieht sich auf nur eine Phase, sie gilt jedoch selbstverständlich entsprechender Weise für die beiden anderen Phasen eines Drehstromnetzes. Bei der dargestellten Spannung U und dem dargestellten Strom i handelt es sich um die an einen GTO-Thyristor 68-73 anstehenden elektrischen Größen. Die Phasenverschiebung zwischen Spannung und Strom ist mit dem Winkel $\alpha$ bezeichnet. Geht man davon aus, daß der betreffende GTO-Thyristor, z. B. der Thyristor 68, bereits einen Einschaltimpuls erhalten hat, so setzt der Stromfluß im Zeitpunkt $t_0$ ein. Tritt nun ein gefährlicher Überstrom auf, der abgeschaltet werden muß, so wird die Steuerelektrode des GTO-Thyristors praktisch unverzögert aus der Einrichtung 67 mit einem Abschaltstrom versorgt. Der Befehl zum Abschalten erfolgt beispielsweise zum Zeitpunkt $t_1$. Nach einer kurzen Abklingzeit $t'_2$ ist der Strom i auf den Wert Null abgeklungen.

Im Vergleich zum Abklingzeitpunkt $t_2$ bei herkömmlichen Thyristoren bedeutet dies eine wesentliche Zeitverkürzung. Der durch einen Kurzschluß hervorgerufene Stromanstieg wirkt sich praktisch nur in dem kurzen Zeitraum zwischen dem Erkennen des Kurzschlusses und dem Abschaltzeitpunkt $t_1$ aus.

Wie oben bereits erwähnt, hat die Drossel 46 mit den angenommenen Zahlenwerten nur noch eine Induktivität von 0,45 Henry. Damit dient sie praktisch nur noch als Glättungselement. Nimmt man eine höherpulsige Gleichrichtung auf der Sekundärseite des Transformator 35 vor, so kann auf die Drossel 46 und den Kondensator 47 ganz verzichtet werden.

## Patentansprüche

1. Einrichtung zur Stromversorgung, bei der die drei Phasen (12, 13, 14) eines Drehstromnetzes über jeweils antiparallel geschaltete Gleichrichterelemente (20 - 25) mit der Primärwicklung (32, 33, 34) eines Drehstrom-Transformators (35) verbunden sind, dessen Sekundärwicklungen (36, 37, 38) über Gleichrichter (40 - 45) einen Verbraucher speisen, und bei der auf der primärseitigen Wechselstromseite (11) Meßfühler (15 - 17, 18) vorgesehen sind, welche bei Vorliegen eines Überstroms auf der primärseitigen Wechselstromseite (11) steuerbare Gleichrichterelemente (20 - 25) sperren, **dadurch gekennzeichnet,** daß alle antiparallel geschalteten Gleichrichterelemente GTO-Thyristoren (20 - 25) sind und die Primärwicklungen (32, 33, 34) des Drehstrom-Transformators (35) im Dreieck geschaltet sind.

2. Einrichtung nach Anspruch 1, **dadurch gekennzeichnet,** daß außer dem wechselstromseitigen Meßfühler (15 - 17, 18) auch noch ein gleichstromseitiger Meßfühler (49, 50) vorgesehen ist, der bei Vorliegen eines Überstroms auf der Gleichstromseite ein Sperren der GTO-Thyristoren (20 -25) bewirkt.

3. Einrichtung nach Anspruch 1, **dadurch gekennzeichnet,** daß zwischen einem Anschluß des Gleichrichters (40 - 45) und einem Verbraucheranschluß (55) eine Drossel (46) liegt und daß parallel zu den Verbraucheranschlüssen (54, 55) ein Kondensator (47) geschaltet ist.

4. Einrichtung nach Anspruch 2, **dadurch gekennzeichnet,** daß der gleichstromseitige Meßfühler (49, 50) den Istwert der Verbraucherspannung und/oder des Verbraucherstroms erfaßt und auf eine Einrichtung (53) gibt, welche den Istwert mit einem Sollwert (56) vergleicht, wobei die Differenz zwischen Ist- und Sollwert einer Einrichtung (57, 58) für die Ansteuerung der GTO-Thyristoren (20 - 25) zugeführt wird.

5. Einrichtung nach Anspruch 4, **dadurch gekennzeichnet,** daß zwischen der Einrichtung (57, 58) für die Ansteuerung der Steuerelektroden der GTO-Thyristoren (20 - 25) und der Einrichtung (53), welche den Istwert mit dem Sollwert vergleicht, ein Spannungsregler (57) vorgesehen ist, der innerhalb eines vorgebbaren Spannungsbereichs die Spannung am Verbraucher regelt.

6. Einrichtung nach Anspruch 1, dadurch gekennzeichnet, daß die auf der primärseitigen Wechselstromseite (11) vorgesehenen Meßfühler pro Phase je eine Wicklung (15, 16, 17) aufweisen, wobei jede Wicklung (15, 16, 17) zwischen die Anode einer ersten Diode und die Kathode einer zweiten Diode angeschlossen ist und alle Dioden einen Dreiphasen-Gleichrichter (60) bilden, dessen Ausgangs-Gleichspannung einem Schwellwertschalter (61) zugeführt ist, dessen Schwelle ein Maß für das Vorliegen von primärseitigem Überstrom ist, daß ferner ein Speicher (63) vorgesehen ist, der von dem Schwellwertschalter (61) gesetzt wird und daß das Ausgangssignal des Schwellwertschalters (61) mit einem Zeitglied (64) verbunden ist, das den Speicher (63) in seine Ausgangslage zurücksetzt.

7. Einrichtung nach Anspruch 1, dadurch gekennzeichnet, daß vor den drei Phasen (12,13,14) des Drehstromnetzes (11) Sicherungen (5,6,7) vorgesehen sind.

8. Einrichtung nach den Ansprüchen 1 und 7, dadurch gekennzeichnet, daß zwischen den Sicherungen (5, 6, 7) und den Phasen (12, 13, 14) Netzschalter (8, 9, 10) vorgesehen sind.

9. Einrichtung nach Anspruch 1, dadurch gekennzeichnet, daß in Reihe zu jedem der GTO-Thyristoren (20 - 25) je eine flinke Sicherung (26 - 31) geschaltet ist.

10. Einrichtung nach Anspruch 1, dadurch gekennzeichnet, daß parallel zu den Primärwicklungen (32 - 34) des Transformators (35) je zwei antiparallel geschaltete Schaltelemente vorgesehen sind, welche im Störungsfall die Primärwicklungen (32 - 34) kurzschließen.

# FIG.1

0249083

FIG.2

FIG.3

0249083

FIG.4

FIG.5